Europäisches Patentamt

European Patent Office

Office européen des brevets

(11) Veröffentlichungsnummer: **0 304 065**

**A1**

(12) **EUROPÄISCHE PATENTANMELDUNG**

(21) Anmeldenummer: 88113452.2

(22) Anmeldetag: 18.08.88

(51) Int. Cl.⁴: **H04J 15/00** , **G02B 6/12**

(30) Priorität: 20.08.87 DE 3727828

(43) Veröffentlichungstag der Anmeldung:
22.02.89 Patentblatt 89/08

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Kindt, Stefen, Dr. rer. nat. Dipl.-Phys.**
**Buchendorferstrasse 25**
**D-8000 München 71(DE)**
Erfinder: **Burghardt, Hartmut, Dr. Ing. Dipl.-Ing.**
**Ernst-Vogler-Weg 11**
**D-8150 Holzkirchen(DE)**

(54) Telekommunikationssystem mit einem Sternnetz von LWL-Anschlussleitungen.

(57) In einem Telekommunikationssystem mit einem Sternnetz von zwischen einer Vermittlungsstelle und Teilnehmerstellen verlaufenden LWL-Teilnehmeranschlußleitungen ist sternpunktseitig eine einer Mehrzahl von LWL-Anschlußleitungen gemeinsame Laser-Sendediode vorgesehen, die mit den betreffenden LWL-Anschlußleitungen über einen IO-(Integrierte-Optik-)Baustein verbunden ist, der einen ein-oder mehrstufigen Verteiler und in den Verteilungspfaden anschlußleitungsindividuelle Modulatoren enthält.
Für bidirektionale Kommunikation sind die anschlußleitungsindividuellen Modulatoren über im IO-Baustein enthaltene Wellenlängen-Duplexer mit der jeweiligen LWL-Anschlußleitung verbunden; die die Wellenlängen-Duplexer führen in Empfangsrichtung zu Gitter-Auskopplern des IO-Bausteins.
Wellenlängen-Duplexer und Modulatoren können jeweils mit einem steuerbaren elektrooptischen Richtkoppler gebildet sein.

FIG 2

## Telekommunikationssystem mit einem Sternnetz von LWL-Anschlußleitungen

Neuere Entwicklungen der Fernmeldetechnik führen zu diensteintegrierenden Digitalnetzen (ISDN), die in der Ebene der Teilnehmeranschlußleitungen eine Sternstruktur von Lichtwellenleitern (LWL) aufweisen; solche mit Lichtwellenleitern ausgestattete Kommunikationsnetze sind für Schmalband- und Breitband-Kommunikation geeignet (DE-PS 24 21 002). Die in einem zukünftigen Breitband-ISDN zu übertragenden Signalraten mögen etwa bei 680 MBit/s in der Richtung von der Vermittlungsstelle zur Teilnehmerstelle und etwa bei 168 Mbit/s in der Rückrichtung liegen.

In einem Lichtwellenleiter-Kommunikationssystem können jeweils übertragungsrichtungsindividuelle Lichtwellenleiter vorgesehen sein oder es kann ein Lichtwellenleiter jeweils in beiden Übertragungsrichtungen ausgenutzt werden; im letzteren Fall kann eine hohe Ausnutzung der Übertragungskapazität eines Lichtwellenleiters durch einen Betrieb der (vorzugsweise Monomode-)Lichtleitfaser im bi-direktionalen Wellenlängenmultiplex (WDM Wave-length Division Multiplex) erreicht werden, indem für die Signalübertragung in der einen Übertragungsrichtung Lichtwellen mit einer niedrigeren Wellenlänge, etwa um 880 nm, und für die Signalübertragung in der anderen Übertragungsrichtung Lichtwellen mit einer höheren Wellenlänge, etwa um 1300 nm, verwendet werden. Hierzu sind dann an den beiden Enden des Lichtwellenleiters ent-sprechende optische Weichenbausteine vorzuse-hen, die jeweils eine lichtleitende Verbindung vom Lichtwellenleiter zum jeweiligen optoelektrischen Wandler und vom jeweiligen elektrooptischen Wandler zum Lichtwellenleiter bewirken.

Die Einführung neuer Telekommunikationssysteme mit LWL-Anschlußleitungen hängt ganz allgemein ab von Art und Umfang der bereits vorhandenen Fernmeldeinfrastrukturen mit den darin bereitgestellten Telekommunikationsdiensten und von der Nachfrage nach neuen Breitbandkommunikationsdiensten. Dabei wird im Bereich der Privathaushalte das potentiell grösste Anschlußvolumen gesehen: dieses Anschlußpotential konkretisiert sich indessen zu einer effektiven Anschlußnachfrage nur bei entsprechend niedrigen Kosten eines Breitband-Teilnehmeranschlusses.

Die Erfindung stellt sich nun die Aufgabe, für ein Telekommunikationssystem mit einem Sternnetz von LWL-Anschlußleitungen einen Weg zu einer merklichen Aufwandsbegrenzung aufzuzeigen.

Zur Verringerung des Aufwandes an Laserdioden für ein zwischen zwei zentralen Vermittlungsstellen verlaufendes Lichtwellenleiterbündel ist es (aus US-PS 46 58 394) bekannt, in der einen zentralen Vermittlungsstelle das Licht einer Laserlichtquelle durch einen ein- oder mehrstufigen Sternkoppler auf eine Mehrzahl von LWL-Zweigleitungen aufzuspalten, die jeweils über einen nachfolgenden Modulator zu ein- und derselben abgesetzten Vermittlungsstelle führen, wobei ein Modulator über einen Wellenlängenduplexer mit der zu-gehörigen, zwischen der zentralen Vermittlungs-stelle und der abgesetzten Vermittlungsstelle verlaufenden LWL-Zweigleitung verbunden ist.

Mit einer solchen Laserdioden-Zentralisierung für sich erhält man indessen keine durchgreifende Verbilligung des einzelnen Teilnehmeranschlusses eines Sternnetzes von LWL-Anschlußleitungen; hierzu zeigt aber die Erfindung einen Weg.

Die Erfindung betrifft ein LWL-Telekommunikationssystem mit LWL-Leitungen und einer einer Mehrzahl von LWL-Leitungen gemeinsamen Laser-Sendediode, die über einen ein- oder mehrstufigen Verteiler und in den Verteilungspfaden vorgesehene leitungsindividuelle Modulatoren mit den betreffenden LWL-Leitungen verbunden ist; dieses LWL-Telekommunikationssystem ist erfindungsgemäß dadurch gekennzeichnet, daß in einem Sternnetz von zwischen einer zentralen Fernmeldestelle (Vermittlungsstelle VSt) und dezentralen Fernmeldestellen (Teilnehmerstellen TSt) verlaufenden LWL-Anschlußleitungen sternpunktseitig der einer einer Mehrzahl von LWL-Anschlußleitungen gemeinsamen Laser-Sendediode nachfolgende ein- oder mehrstufige Verteiler und die in den Vertei-lungspfaden vorgesehenen anschlußleitungsindivi-duellen Modulatoren ebenso wie die anschlußleitungsindividuellen Modulatoren mit der jeweiligen LWL-Anschlußleitung verbindende Wellenlängen-Duplexer in einem gemeinsamen IO-(Integrierte-Optik-)Baustein integriert sind.

Die Erfindung bringt den Vorteil mit sich, in einem LWL-Telekommunikationssystem, in dem die Lichtwellenleiter dabei auch bidirektional betrieben werden können, durch Einsatz von jeweils ei-ner Mehrzahl von LWL-Teilnehmeranschlußleitun-gen gemeinsamen IO-Bausteinen der angegebenen Art vermittlungsstellenseitig nicht nur keine teilneh-merindividuellen Sendedioden vorsehen zu müs-sen, sondern den pro Teilnehmeranschluß entste-henden Investitionskostenanteil auch durch Integra-tion einer Vielzahl von teilnehmeranschlußindividu-ellen Systemkomponenten in einem IO-(Integrierte-Optik-)Baustein entsprechend reduzieren zu können.

Es sei an dieser Stelle bemerkt, daß es (aus GB-A-2 131 567) im Zusammenhang mit einem aus drei oder vier integriert-optischen Phasenmo-dulatoren gebildeten Einseitenband-Modulator be-kannt ist, einen Lichtwellenleiter mittels Y-förmiger Verzweigungselemente in drei oder vier LWL-Zweige aufzuspalten, in die die einzelnen integriert-optischen Phasenmodulatoren eingefügt sind und die anschließend über entsprechende Y-Elemente wieder zu einem Lichtwellenleiter vereinigt werden; nähere Berührungspunkte mit der vorliegenden Erfindung sind indessen nicht gegeben.

Um demgegenüber wieder auf die Erfindung zurückzukommen, so können in deren weiterer Ausgestaltung zwei Laser-Sendedioden über einen im IO-Baustein ebenfalls integrierten Umschalter wahlweise mit dem Verzweiger verbindbar sein, was bei Ausfall einer Sendediode die Möglichkeit einer Ersatzschaltung und damit eine entsprechend erhöhte Betriebssicherheit mit sich bringt.

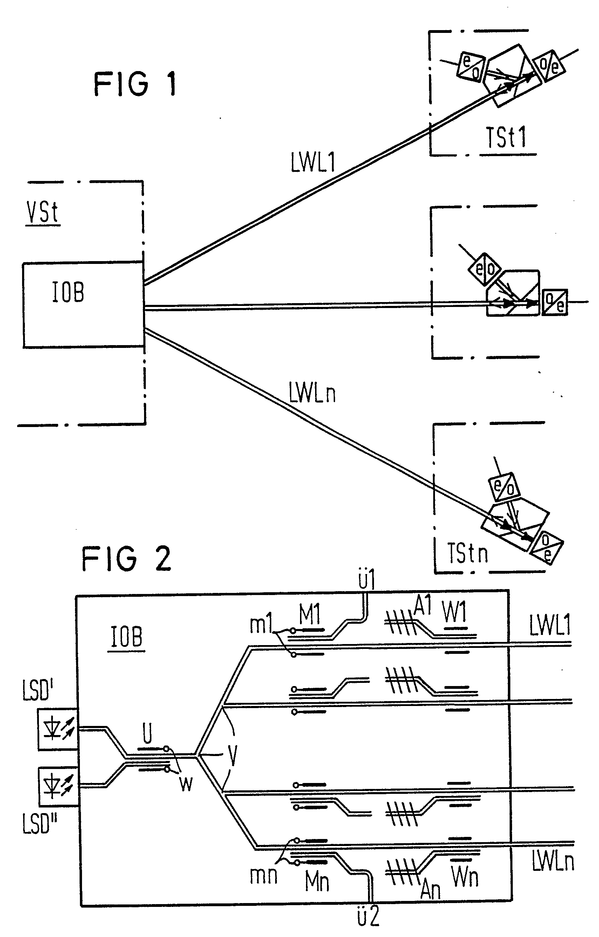

einem dieser Mehrzahl von (z.B. 8 oder 12) Lichtwellenleiter-Anschlußleitungen gemeinsamen IO-(Integrierte-Optik-)Baustein IOB verbunden, wie er schematisch in einem zum Verständnis der Erfindung erforderlichem Umfang in FIG 2 näher dargestellt ist.

Gemäß FIG 2 ist eine einer Mehrzahl von LWL-Anschlußleitungen LWL1,...,LWLn gemeinsame Laser-Sendediode LSD' über in einem solchen IO-Baustein IOB vorgesehene Streifenwellenleiter - das sind durch Eindiffusion (z.B. von Titan in Lithiumniobat) in einem Substrat erzeugte schmale dünne Streifen, die eine größere optische Brechzahl als das Substrat haben, - mit den betreffenden Lichtwellenleiter-Anschlußleitungen verbunden.

Dabei führt der von der Sendediode LSD' ausgehende Streifenwellenleiter zunächst über einen in an sich (z.B. aus telcom report 10(1987)2, 90...98, Bild 8) bekannter Weise mit einem steuerbaren elektrooptischen Richtkoppler zu realisierenden optischen Umschalter U, über den alternativ eine (Ersatz-)Laser-Sendediode LSD" wirksamgeschaltet werden kann.
Bei einem steuerbaren elektrooptischen Richtkoppler sind, wie dies auch in FIG 2 angedeutet ist, zwei Streifenwellenleiter in einem Koppelbereich bestimmter Länge sehr eng, in einem Abstand von typischerweise etwa 5 µm, nebeneinander geführt, so daß Lichtenergie von dem einen Streifenwellenleiter auf den anderen Streifenwellenleiter übergekoppelt werden kann. Neben und zwischen den Streifenwellenleitern befinden sich Steuerelektroden, die mit einem die Überkopplung beeinflussenden Steuersignal beaufschlagt sind. Dabei können die Elektroden auch abschnittsweise gegensätzlich gepolt sein (sog.$\Delta\beta$-Reversal-Richtkoppler).

Hinter dem optischen Umschalter U verzweigt sich der Streifenwellenleiter in einem beispielsweise mit Y-förmigen Verzweigerelementen V zweistufig ausgebildeten Verzweiger in im Beispiel gemäß FIG 2 vier anschlußleitungsindividuelle Pfade. In diesen Verzweigungspfaden ist dann jeweils ein optischer Modulator M1,....,Mn vorgesehen; in FIG 2 ist dazu angedeutet, daß die Modulatoren M1,...,Mn jeweils mit einem steuerbaren elektrooptischen Richtkoppler gebildet sind. Solche Modulatoren sind ebenfalls an sich (z.B. aus telcom report, a.a.O., Bild 8 und 9) bekannt und brauchen hier nicht näher erläutert zu werden.

Das von der (z.B. 1300-nm-)Laser-Sendediode LSD' oder LSD" ausgehende und im Verzweiger V auf n Verzweigungspfade aufgespaltene Gleichlicht wird nun in den einzelnen optischen Modulatoren M1,.....,Mn nach Maßgabe der an deren Steuerklemmen m1, ..., mn anliegenden elektrischen Sendesignale kanalindividuell amplituden-bzw. intensitätsmoduliert, um danach über die zugehörige LWL-Anschlußleitung LWL1,...,LWLn zur jeweiligen Teilnehmerstelle TSt (in FIG 1) hin übertragen zu werden.

Für einen bidirektionalen Betrieb der LWL-Teilnehmeranschlußleitungen LWL1,...,LWLn im Wellenlängenmultiplex (WDM) sind im IO-Baustein IOB die einzelnen anschlußleitungsindividuellen Streifenwellenleiter jeweils zwischen Modulator M1,...,Mn und Lichtwellenleiter-Anschlußleitung LWL1,...,LWLn über einen Wellenlängen-Duplexer W1,...,Wn geführt. Ein solcher Wellenlängen-Duplexer kann ebenfalls mit einem steuerbaren elektrooptischen Richtkoppler gebildet sein, wie dies prinzipiell ebenfalls (z.B. aus telcom report, a.a.O., Bild 11) bekannt ist und hier nicht weiter erläutert zu werden braucht.
In Senderichtung verbinden die Wellenlängen-Duplexer W1,...,Wn die anschlußleitungsindividuellen Modulatoren M1,...,Mn mit der jeweiligen LWL-Anschlußleitung LWL1,...,LWLn; in Empfangsrichtung koppeln die Wellenlängen-Duplexer das über die jeweilige LWL-Anschlußleitung empfangene Licht einer Wellenlänge von z.B. etwa 880 nm aus dem mit der LWL-Anschlußleitung verbundenen Streifenwellenleiter aus in einen jeweils zweiten Streifenwellenleiter, über den das empfangene Lichtsignal zum jeweiligen optoelektrischen Wandler gelangen kann. In FIG 2 ist dazu angedeutet, daß diese zweiten Streifenwellenleiter jeweils in einem sog. Gitter-Auskoppler - das ist eine fotolithographisch auf die Oberfläche des IO-Bausteins aufgebrachte Gitterstruktur, die das Licht aus dem Streifenwellenleiter seitlich heraustreten lässt, - enden; den Gitter-Auskopplern A1,...,An gegenüber (in FIG 2 über der Zeichnungsebene) möge dann jeweils ein optoelektrischer Wandler, z.B. eine pin-Diode, vorgesehen sein, die das empfangene Lichtsignal in ein entsprechendes elektrisches Empfangssignal umsetzt.

Wie schon erwähnt wurde, kann bei Ausfall der Laser-Sendediode (z.B. LSD') eine Ersatzschaltung auf die jeweils andere Laser-Sendediode (LSD") vorgenommen werden; ein Austausch des defekten Lasersenders ist dann ohne Unterbrechung des Sendebetriebs möglich. Dazu kann man eine Überwachung der jeweils aktiven Laser-Sendediode mit Hilfe eines Monitors dadurch ermöglichen, daß man einen nicht benötigten Ausgang eines Modulators (M1,...,Mn) zu einem aus dem IO-Baustein herausführenden Monitorausgang ausbildet. Dies ist auch in FIG 2 angedeutet, wo zwei solche Ausgänge mit ü1 und ü2 bezeichnet sind.

## Ansprüche

1. LWL-Telekommunikationssystem mit LWL-Leitungen und einer einer Mehrzahl von LWL-Leitungen (LWL1....LWLn) gemeinsamen Laser-Sendediode (LSD), die über einen ein- oder mehrstufigen Verteiler (V) und in den Verteilungspfaden vorgesehene leitungsindividuelle Modulatoren (M1,...,Mn) mit den betreffenden LWL-Leitungen (LWL1,....LWLn) verbunden ist.
**dadurch gekennzeichnet,**
daß in einem Sternnetz von zwischen einer zentralen Fernmeldestelle (Vermittlungsstelle VSt) und dezentralen Fernmeldestellen (Teilnehmerstellen TSt) verlaufenden LWL-Anschlußleitungen sternpunktseitig der einer einer Mehrzahl von LWL-Anschlußleitungen (LWL1,...LWLn) gemeinsamen Laser-Sendediode (LSD) nachfolgende ein- oder mehrstufige Verteiler (V) und die in den Verteilungspfaden vorgesehenen anschlußleitungsindividuellen Modulatoren (M1,...,Mn) ebenso wie die anschlußleitungsindividuellen Modulatoren (M1,...,Mn) mit der jeweiligen LWL-Anschlußleitung (LWL1,...LWLn) verbindende Wellenlängen-Duplexer (W1,...Wn) in einem gemeinsamen IO-(Integrierte-Optik-)Baustein (IOB) integriert sind.

2. Telekommunikationssystem nach Anspruch 1,
**dadurch gekennzeichnet,**
daß die Wellenlängen-Duplexer (W1,...,Wn) in Empfangsrichtung zu im IO-Baustein (IOB) ebenfalls integrierten Gitter-Auskopplern (A1,...,An) führen.

3. Telekommunikationssystem nach Anspruch 1 oder 2,
**dadurch gekennzeichnet,**
daß die Wellenlängen-Duplexer (W1,...,Wn) jeweils mit einem steuerbaren elektrooptischen Richtkoppler gebildet sind.

4. Telekommunikationssystem nach einem der Ansprüche 1 bis 3,
**dadurch gekennzeichnet,**
daß die Modulatoren (M1,...,Mn) jeweils mit einem steuerbaren elektrooptischen Richtkoppler gebildet sind.

5. Telekommunikationssystem nach einem der Ansprüche 1 bis 4,
**dadurch gekennzeichnet,**
daß zwei Laser-Sendedioden (LSD', LSD") über einen im IO-Baustein (IOB) integrierten Umschalter (U) wahlweise mit dem Verzweiger (V) verbindbar sind.

6. Telekommunikationssystem nach Anspruch 5,
**dadurch gekennzeichnet,**
daß der Umschalter (U) mit einem steuerbaren elektrooptischen Richtkoppler gebildet ist.

7. Telekommunikationssystem nach einem der Ansprüche 4 bis 6,
**dadurch gekennzeichnet,**
daß ein freier Modulatorausgang als Monitorausgang (ü1, ü2) ausgebildet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 131 567 (STANDARD TELEPHONES & CABLES) * Seite 1, Zeilen 78-107; Seite 2, Zeilen 57-62; Seite 3, Zeilen 107-125; Seite 4, Zeilen 28-103 * --- | 1-4 | H 04 J 15/00 G 02 B 6/12 |
| D,Y | TELCOM REPORT, Band 10, Nr. 2, 1987, Seiten 90-98, München, DE; F. AURACHER et al.: "Entwicklungstendenzen der integrierten Optiek" * Seite 93, linke Spalte, Zeile 42 - rechte Spalte, Zeile 11; Seite 95, linke Spalte, Zeile 9 - Seite 96, rechte Spalte, Zeile 12 * --- | 1-4 | |
| Y | US-A-4 658 394 (CHENG et al.) * Spalte 1, Zeilen 37-62 * --- | 1 | |
| A | FREQUENZ, Band 36, Nr. 12, Dezember 1982, Seiten 319-327, Berlin, DE; M. ROCKS et al.: "Optische Multiplex-Systeme in der optischen Nachrichtentechnik" * Seite 324, Absatz 3.1.1; Seite 324, Absatz 3.2 - Seite 325, linke Spalte, Zeile 11 * ------ | 1-4 | RECHERCHIERTE SACHGEBIETE (Int. Cl.4) H 04 J G 02 B H 04 B |

Der vorliegende Recherchenbericht wurde für alle Patentansprüche erstellt

| Recherchenort | Abschlußdatum der Recherche | Prüfer |
|---|---|---|
| DEN HAAG | 26-10-1988 | VAN DEN BERG,J.G.J. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
Dokument